# EUROPÄISCHE PATENTSCHRIFT

(11) **EP 3 864 477 B1**
(45) Veröffentlichungstag und Bekanntmachung des Hinweises auf die Patenterteilung: **02.08.2023**
(21) Anmeldenummer: 19765984.0
(22) Anmeldetag: 05.09.2019
(51) Int. Cl.: G05B 19/418, G08C 17/00

(54) **FELDGERÄTEADAPTER ZUR DRAHTLOSEN DATENÜBERTRAGUNG**
FIELD DEVICE ADAPTER FOR WIRELESS DATA TRANSFER
ADAPTATEUR D'APPAREIL DE TERRAIN POUR LA TRANSMISSION SANS FIL DE DONNÉES

(30) Priorität: 09.10.2018 DE 102018124902
(43) Veröffentlichungstag der Anmeldung: 18.08.2021
(73) Patentinhaber: Endress+Hauser SE+Co. KG, 79689 Maulburg (DE)
(72) Erfinder: SCHÄUBLE, Harald, 79541 Lörrach (DE); PAUL, Tobias, 79650 Schopfheim (DE); GEIB, Patrick, 79713 Bad Säckingen (DE); JEHLE, Max, 79664 Wehr (DE)
(74) Vertreter: Laufer, Michael
(86) Internationale Anmeldenummer: PCT/EP2019/073729
(87) Internationale Veröffentlichungsnummer: WO 2020/074189

(56) Entgegenhaltungen:
- EP-A2- 2 527 940
- DE-A1-102016 122 714
- US-A1- 2008 280 568
- US-A1- 2012 062 203

## Beschreibung

Die Erfindung bezieht sich auf einen Feldgeräteadapter zur drahtlosen Datenübertragung zum Anschließen an eine für ein Display eines Feldgeräts vorgesehene feldgeräteinterne Schnittstelle, ein System der Automatisierungstechnik und ein Verfahren zum Betreiben eines Feldgeräteadapters zur drahtlosen Datenübertragung.

In der Prozessautomatisierungstechnik werden vielfach Feldgeräte eingesetzt, die zur Erfassung und/oder Beeinflussung von Prozessvariablen dienen. Zur Erfassung von Prozessvariablen dienen Sensoren, wie beispielsweise Füllstandsmessgeräte, Durchflussmessgeräte, Druck- und Temperaturmessgeräte, pH-Redoxpotentialmessgeräte, Leitfähigkeitsmessgeräte, etc., welche die entsprechenden Prozessvariablen Füllstand, Durchfluss, Druck, Temperatur, pH-Wert bzw. Leitfähigkeit erfassen. Als Feldgeräte werden im Prinzip alle Geräte bezeichnet, die prozessnah eingesetzt werden und die prozessrelevante Informationen liefern oder verarbeiten.

Eine Vielzahl solcher Feldgeräte wird von der Firma Endress + Hauser hergestellt und vertrieben.

Gegenwärtig sind in einer Vielzahl der bestehenden Automatisierungsanlagen noch Zweileiterfeldgeräte gängig, die über eine Zweidrahtleitung zu einer übergeordneten Einheit, bspw. eine Steuereinheit SPS, verbunden sind. Die Zweileiterfeldgeräte sind derartig ausgebildet, dass eine Energieversorgung über die Zweidrahtleitung erfolgt. Ferner sind die Zweileiterfeldgeräte derartig ausgebildet, dass die Mess- bzw. Stellwerte als Haupt-Prozessvariable über die Zweidrahtleitung bzw. das Zweileiterkabel analog in Form eines 4-20 mA Signals kommuniziert, d.h. übertragen, werden. Neben der primären Funktion, nämlich der Erzeugung von Messwerten, weisen moderne Feldgeräte zahlreiche weitere Funktionalitäten auf, die ein effizientes und sicheres Führen des zu beobachtenden Prozesses unterstützen. Dazu zählen u. a. solche Funktionen, wie die Eigenüberwachung des Feldgerätes, das Abspeichern von Messwerten, das Erzeugen von Steuersignalen für Stellglieder, etc..

Aufgrund der Versorgung über die Zweidrahtleitung sind die Feldgeräte in der Regel hinsichtlich der Energiezufuhr stark beschränkt. Dies führt dazu, dass die einzelnen elektrischen Komponenten üblicherweise derartig aufeinander abgestimmt sind, dass der Gesamtenergiebedarf des Feldgerätes eine durch die Zweidrahtleitung maximal zur Verfügung gestellte Energie gerade nicht überschreitet. Aufgrund der beschränkt zur Verfügung stehenden Energie ist es nicht ohne weiteres möglich, derartige Zweileiterfeldgeräte nachträglich mit einem Feldgeräteadapter zur drahtlosen Datenübertragung auszurüsten. US 2008/280568 A1 bezieht sich auf einen Feldgeräteadapter zum Nachrüsten eines Feldgerätes.

Der Erfindung liegt somit die Aufgabe zugrunde, eine Möglichkeit zur nachträglichen Ausrüstung eines Feldgerätes mit einem Feldgeräteadapter zur drahtlosen Datenübertragung vorzuschlagen.

Die Aufgabe wird erfindungsgemäß gelöst durch den Feldgeräteadapter zur drahtlosen Datenübertragung gemäß Patentanspruch 1, das System der Automatisierungstechnik gemäß Patentanspruch 6 und das Verfahren gemäß Patentanspruch 8.

Der erfindungsgemäße Feldgeräteadapter zur drahtlosen Datenübertragung zum Anschließen an eine für ein Display eines Feldgeräts vorgesehene feldgeräteinterne Schnittstelle, umfasst:
- eine Schnittstelle zum Anschließen an die für das Display des Feldgerätes vorgesehene feldgeräteinterne Schnittstelle;
- ein Funkmodul das dazu eingerichtet ist, ein Datenpaket gemäß einem Standard eines Low Power Wide Area Networks drahtlos auszusenden, wobei das Funkmodul ferner dazu eingerichtet ist, das Datenpaket ausschließlich auszusenden und keine Datenpakte zu empfangen;
- eine Adapterelektronik die dazu eingerichtet ist, die über die feldgeräteinterne Schnittstelle von dem Feldgerät stammenden Daten in Datenpakete, vorzugsweise in Datenpakete mit einer konstanten oder mit einer unterschiedlichen Größe zu wandeln und ferner eine über die feldgeräteinterne Schnittstelle bereitgestellte Energie auf einen vorbestimmten Wert zu begrenzen und mit der begrenzten Energie einen Energiespeicher, vorzugsweise kontinuierlich zu laden, wobei der vorbestimmte Wert derartig festgelegt ist, dass der Wert höchstens einem maximalen Energiebedarf des vorgesehenen Displays entspricht und die Adapterelektronik ferner dazu eingerichtet ist, einen Ladezustand des Energiespeichers zu überwachen und anhand des Ladezustands dem Funkmodul eine von dem Energiespeicher stammende Energie zum Aussenden des Datenpaketes zur Verfügung zu stellen, sodass das Funkmodul das Datenpaket aussendet, wobei die Adapterelektronik ferner dazu eingerichtet ist, einen aktuell ermittelten Ladezustand mit einem vorbestimmten Ladezustand zu vergleichen und bei Erreichung des vorbestimmten Ladezustandes dem Funkmodul eine von dem Energiespeicher stammende Energie zum Aussenden des Datenpaketes zur Verfügung zu stellen, sodass das Funkmodul das Datenpaket aussendet.

Eine vorteilhafte Ausgestaltung des erfindungsgemäßen Feldgeräteadapters sieht vor, dass der Standard einem der in Release 13 der 3GPP im Jahr 2016 veröffentlichten Standards, insbesondere einem LTE Cat NB1 Standard entspricht.

Eine vorteilhafte Ausgestaltung des erfindungsgemäßen Feldgeräteadapters sieht vor, dass der Energiespeicher einen Kondensator, insbesondere einen Elektrolytkondensator umfasst und die Adapterelektronik einen Aufwärtswandler aufweist, der dazu ausgebildet ist, eine an der feldgeräteinternen Schnittstelle anliegende Spannung auf ein im Verhältnis zu der anliegenden Spannung höhere, insbesondere wenigstens zweifach höhere Spannung zu konvertieren und ferner die höhere Spannung an dem Kondensator zum Laden bereitzustellen. Insbesondere kann die Ausgestaltung vorsehen, dass das Funkmodul dazu eingerichtet ist, in einem aktiven Modus die Datenpakete auszusenden und in einem nicht aktiven Modus eine Funkverbindung zu dem Low Power Wide Area Network zwar aufrechtzuerhalten, jedoch weniger Energie zu verbrauchen, wobei die Adapterelektronik ferner dazu eingerichtet ist, bei Erreichen des bestimmten Ladezustandes des Energiespeichers das Funkmodul von dem nicht aktiven in den aktiven Modus zu schalten.

Insbesondere kann die Ausgestaltung vorsehen, dass die Adapterelektronik ferner derartig eingerichtet ist, Datenpakete mit konstanter Größe bereitzustellen und die Größe des Datenpakets und der vorbestimmte Ladezustand derartig aufeinander abgestimmt sind, dass die von dem Energiespeicher stammende Energie gerade zum Aussenden eines einzelnen Datenpakets ausreicht.

Eine alternative vorteilhafte Ausgestaltung des erfindungsgemäßen Feldgeräteadapters sieht vor, dass die Adapterelektronik ferner dazu eingerichtet ist, Datenpakete mit unterschiedlicher Größe bereitzustellen und ferner die Größe eines jeden Datenpaketes vor dem Aussenden an einen aktuellen Ladezustand des Energiespeichers anzupassen, sodass das Funkmodul größenangepasste Datenpakete in Abhängigkeit des aktuellen Ladezustandes aussendet.

Die Erfindung betrifft weiterhin ein System der Automatisierungstechnik aufweisend ein Feldgerät und einen Feldgeräteadapter zur drahtlosen Datenübertragung nach einer der zuvor beschriebenen Ausgestaltungen, wobei das Feldgeräte eine Feldgeräteelektronik mit einer feldgeräteinternen Schnittstelle für ein Display aufweist und der Feldgeräteadapter mit der Schnittstelle an die feldgeräteinterne Schnittstelle elektrisch angeschlossen ist.

Eine vorteilhafte Ausgestaltung des erfindungsgemäßen Systems sieht vor, dass das Feldgerät ferner eine Displayaufnahme zur mechanischen Fixierung des Displays aufweist und die Feldgeräteelektronik derartig in dem Feldgerät positioniert ist, dass die Displayaufnahme in einem Gehäuseabschnitt mit einer transparenten Gehäusewand angeordnet ist, wobei der Feldgeräteadapter mit einer äußeren Kontur korrespondierend zu einer äußeren Kontur des Displays ausgebildet ist und der Feldgeräteadapter anstelle des Displays in die Displayaufnahme zur mechanischen Fixierung eingebracht ist, sodass das Feldgerät anstelle des Displays den in der Displayaufnahme mechanisch gehaltenten Feldgeräteadapter aufweist. Die Erfindung betrifft ferner ein Verfahren zum Betreiben eines Feldgeräteadapters zur drahtlosen Datenübertragung nach einer der zuvor beschriebenen Ausgestaltungen an einem Feldgerät, aufweisend die folgenden Schritte:
- Freilegen einer feldgeräteinternen Schnittstelle des Feldgerätes an der ein Display des Feldgerätes elektrisch anschließbar ist;
- Anschließen des Feldgeräteadapters an die feldgeräteinterne Schnittstelle, sodass der Feldgeräteadapter anstelle des Displays elektrisch an die feldgeräteinterne Schnittstelle angeschlossen ist.

Die Erfindung wird anhand der nachfolgenden Zeichnung näher erläutert. Es zeigt:

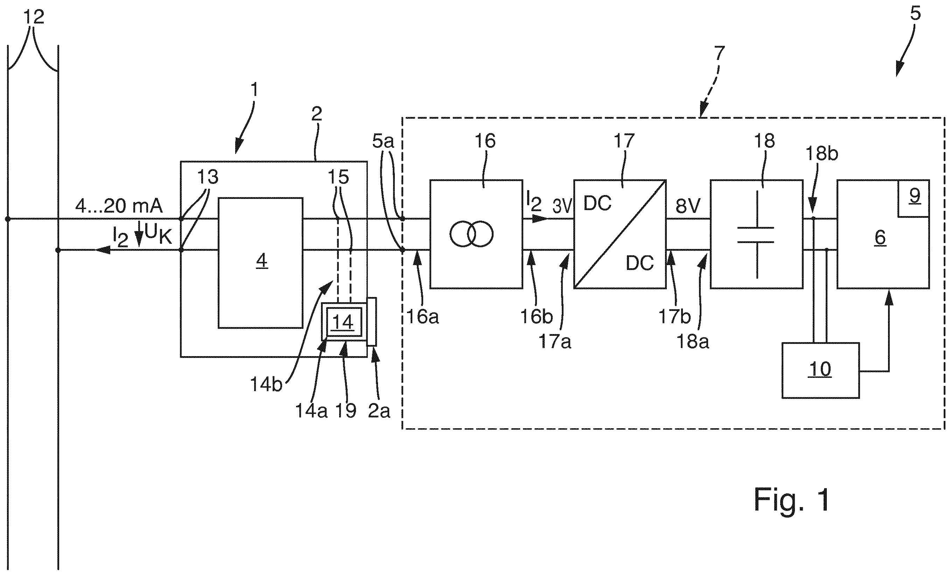

Fig. 1: eine schematische Darstellung eines Feldgerätes, bei dem ein werkseitig vorgesehenes Display durch einen erfindungsgemäß ausgestalteten Feldgeräteadapter zur drahtlosen Datenübertragung nachträglich umgerüstet wurde.

Figur 1 zeigt ein Zweileiterfeldgerät 1, welches ein vorzugsweise metallisches Gehäuse 2 umfasst, indem eine Feldgeräteelektronik 4 angeordnet ist. Das Feldgerät 1 ist derartig ausgebildet, dass dieses Anschlussklemmen 13 aufweist, über die eine Zweidrahtleitung 12 elektrisch angeschlossen ist bzw. anschließbar ist. Über die Zweidrahtleitung 12 wird die Feldgeräteelektronik 4 und somit das Feldgerät 1 an eine, in Fig. 1 nicht gesondert dargestellte, übergeordnete Einheit angeschlossen, um mit der übergeordneten Einheit Daten drahtgebunden zu kommunizieren. Hierbei werden die Messwerte als Haupt-Prozessvariable über die Zweidrahtleitung 12 analog in Form eines 4-20 mA Stromsignals kommuniziert, indem ein entsprechender Stromwert des 4-20 mA Stromsignals durch die Feldgeräteelektronik gestellt wird. Andere Daten, die bspw. Parameter des Feldgerätes umfassen können, werden in Form eines digitalen Zweileitersignals, bspw. gemäß dem HART Standard, übertragen.

Ferner wird über die Zweidrahtleitung bzw. das 4-20 mA Stromsignal die Feldgeräteelektronik 4 auch mit Energie versorgt. Hierfür wird der Feldgeräteelektronik in Abhängigkeit einer Klemmspannung Uk, die an den Anschlussklemmen anliegt, und dem 4-20 mA Stromsignal, eine Betriebsleistung zur Verfügung gestellt. Für gewöhnlich umfasst die Klemmspannung Uk einen minimalen Spannungswert von ca. 10 V, sodass sich eine minimale Betriebsleistung für die Feldgeräteelektronik von Pmin = 10V * 4 mA = 40 mW ergibt. Die Klemmspannung kann prinzipiell aber auch einen davon abweichenden Wert aufweisen, bspw. einen Wert aus dem Bereich von 10-30 V, sodass sich auch die minimale Betriebsleistung die dem Feldgerät zur Verfügung steht ändert.

Um einen sicheren Betrieb des Feldgerätes 1 zu gewähren, ist die Feldgeräteelektronik 4 derartig ausgebildet, dass sämtliche Funktionen, insbesondere das Erfassen bzw. Stellen von Messwerte, die Bearbeitung dieser und die Übertragung bzw. Stellen eines entsprechenden Stromwertes des 4-20 mA Stromsignales mittels der minimalen Betriebsleistung Pmin durchführbar sind.

Ferner ist die Feldgeräteelektronik 4 werkseitig, d.h. durch den Feldgerätehersteller, dazu eingerichtet, dass ein Teil der minimalen Betriebsleistung dauerhaft für ein Display zum Anzeigen von bspw. Mess- bzw. Stellwerten oder den anderen Daten, wie Parameter bzw. Konfigurationswerte des Feldgerätes, etc., zur Verfügung steht.

Das Display 14, welches entweder als Teil der Feldgeräteelektronik oder als separate Einheit ausgebildet ist, ist über eine interne Feldgeräteschnittstelle mit der Feldgeräteelektronik verbunden bzw. verbindbar. Das Feldgerät kann ferner eine Displayaufnahme bzw. Halterung zur mechanischen Fixierung des Displays aufweisen. Die Displayaufnahme kann bspw. als Teil der Feldgeräteelektronik ausgebildet sein. Die Displayaufnahme kann ferner derartig in dem Feldgerät angeordnet sein, dass ein sich darin gehaltenes Display in einem Gehäuseabschnitt mit einer transparenten Gehäusewand, bspw. einem Gehäusedeckel, befindet.

Fig. 1 zeigt ferner einen erfindungsgemäßen Feldgeräteadapter 5 zum Anschließen an die für das Display 14 vorgesehene interne Feldgeräteschnittstelle 15, sodass das Feldgerät 1 nachträglich, d.h. nachdem dieses bereits in eine Automatisierungsanlage integriert wurde, zur drahtlosen Datenübertragung umgerüstet werden kann. Beispielsweise kann der Feldgeräteadapter 5 durch einen Servicetechniker angebracht werden, indem dieser den Deckel 2a des Gehäuses 2 zur Freilegung der Schnittstelle mechanisch entfernt, die Verbindungsleitung 14b zum Display 14 von der Schnittstelle 15 löst und anschließend den Feldgeräteadapter 5 an die Schnittstelle 15 anschließt.

Um den Feldgeräteadapter 5 in der eigentlich für das Display 14 vorgesehenen Halterung 19 mechanisch zu fixieren, kann eine äußere Kontur des Feldgeräteadapters 5 im Wesentlichen zu einer äußeren Kontur des Displays 14a korrespondieren, sodass die Halterung 19 den Feldgeräteadapter 5 aufnehmen kann.

Der Feldgeräteadapter 5 umfasst ferner eine Strombegrenzungsschaltung 16 die dazu eingerichtet ist, einen über die Schnittstelle 15 fließenden Strom I2 auf einen vorbestimmten Wert zu begrenzen, sodass dem Feldgeräteadapter 5 nur eine maximale Betriebsleistung über die Schnittstelle bereitgestellt wird. Der vorbestimmte Wert ist dabei an das in dem spezifische Feldgerät, an das der Adapter angeschlossen werden soll, angepasst. Vorzugsweise entspricht der vorbestimmte Wert einem zum Betrieb des Displays 14 benötigten Stromwert, bspw. einem Wert kleiner 3 mA, bevorzugt kleiner 2,0 mA, besonders bevorzugt kleiner 1,5 mA, ganz besonders bevorzugt entspricht der Wert ca. 1 mA. Da Feldgeräte 1 für gewöhnlich unterschiedliche Displays 14 aufweisen, können unterschiedliche Feldgeräteadapter 5 auch unterschiedliche vorbestimmte Werte, auf die die Strombegrenzungsschaltung 16 den Stromfluss über die interne Schnittstelle I2 begrenzt, umfassen.

Ferner umfasst der Feldgeräteadapter 5 einen Aufwärtswandler 17 der an einem Eingang 17a mit einem Ausgang 16b der Strombegrenzungsschaltung verbunden ist. Der Aufwärtswandler 17 ist dazu eingerichtet, eine Eingangsspannung die an seinem Eingang bzw. dem Ausgang der Strombegrenzungsschaltung anliegt auf eine im Vergleich zu der Eingangsspannung höhere Ausgangsspannung zu wandeln. Beispielsweise kann der Aufwärtswandler derartig eingerichtet sein, dass eine Eingangsspannung um einen Faktor größer 2 auf eine Ausgangsspannung gewandelt wird. In dem beschrieben Ausführungsbeispiel wandelt der Aufwärtswandler 17 von ca. 3 V auf ca. 8 V, die an einem Ausgang des Aufwärtswandlers 17b bereitgestellt wird.

An dem Ausgang 17b des Aufwärtswandlers 17 ist mit einem Eingang ein aufladbarer Energiespeicher 18 angeschlossen, sodass die von dem Aufwärtswandler 17 bereitgestellte Ausgangsspannung den Energiespeicher 18 lädt. Der Energiespeicher kann bspw. ein oder mehrere Kondensatoren umfassen. Aufgrund seiner hohen Speicherkapazität verbunden mit der verhältnismäßig kleinen Baugröße haben sich insbesondere Elektrolytkondensatoren als bevorzugt herausgestellt.

Der Feldgeräteadapter 5 umfasst ferner ein Funkmodul 6 mit einer Funkantenne 9, welches dazu ausgebildet ist, Datenpakete drahtlos auszusenden. Das Funkmodul 6 ist insbesondere dazu eingerichtet, die Datenpakete gemäß dem LTE Cat NB1 Standard des Release 13 der 3GPP, veröffentlicht im Juni 2016, auszusenden. Da eine Energiezufuhr der Adapterelektronik durch die Strombegrenzungsschaltung den vorbestimmten Wert nicht überschreiten darf und ein derartiges Funkmodul 6 deutlich mehr Energie zum Empfangen von Datenpaketen als zum Senden benötigt würde, ist das Funkmodul 6 ferner derartig ausgebildet, dass dieses lediglich Datenpakete aussenden und nicht empfangen kann.

Um zum Aussenden eines einzelnen Datenpaketes ausreichend Energie zur Verfügung zu haben, ist die Adapterelektronik 10, 16, 17, 18 dazu eingerichtet, ein Ladezustand bzw. Ladeniveau des Energiespeichers 18 zu überwachen und in Abhängigkeit des Ladezustands dem Funkmodul 6 eine zum Aussenden des Datenpakets notwendige Energie zur Verfügung zu stellen. Hierfür kann die Adapterelektronik eine Logikeinheit 10 vorsehen, bspw. einen Mikroprozessor und/oder eine Schmitt-Trigger-Schaltung aufweisen.

Ergänzend kann die Adapterelektronik 10, 16, 17, 18 dazu eingerichtet sein, die über die feldgeräteinterne Schnittstelle 15 von dem Feldgerät 1 stammenden Daten in Datenpakete mit einer konstanten Größe zu wandeln. Dies bedeutet, dass sämtliche Datenpakte, die von dem Funkmodul nacheinander ausgesendet werden, dieselbe Größe aufweisen. Aufgrund der konstanten Größe der Datenpakte kann die Adapterelektronik 10, 16, 17, 18 ferner dazu eingerichtet sein, einen aktuellen Ladezustand des Energiespeichers 18 mit einem konstanten vorbestimmten Ladezustand zu vergleichen und bei Erreichen des vorbestimmten Ladezustands dem Funkmodul 6 die im Energiespeicher 16 gespeicherte Energie zum Aussenden eines Datenpakets zur Verfügung zu stellen. Der vorbestimmte Ladezustand ist hierbei so bemessen, dass die im Energiespeicher 16 gespeicherte Energie gerade zum Aussenden von einem einzigen Datenpaket durch das Funkmodul 6 ausreicht. Auf diese Weise lassen sich Datenpakete in einem konstanten zeitlichen Abstand, bspw. jede Stunde, jeden Tag, etc., durch den Adapter aussenden.

Alternativ kann die Adapterelektronik 10, 16, 17, 18 dazu eingerichtet sein, die über die feldgeräteinterne Schnittstelle 15 von dem Feldgerät 1 stammenden Daten in Datenpakete mit unterschiedlicher Größe zu wandeln. Aufgrund der unterschiedlichen Größe der Datenpakete kann die Adapterelektronik 10, 16, 17, 18 ferner dazu eingerichtet sein, die Größe an einen aktuell ermittelten Ladezustand des Energiespeichers 18 anzupassen, sodass das Funkmodul 6 Datenpaket mit unterschiedlicher Größe aussendet. Dies bedeutet, dass das Funkmodul 6 die Datenpakte aussendet sobald die im Energiespeicher 18 gespeicherte Energie dazu ausreicht. Ein zeitlicher Abstand zwischen den aufeinander ausgesendeten Datenpaketen ist somit nicht zwingend konstant.

### Bezugszeichenliste

- 1: Feldgerät
- 2: Gehäuse des Feldgerätes
- 2a: Deckel des Gehäuses
- 4: Feldgeräteelektronik
- 5: Feldgeräteadapter
- 5a: Schnittstelle des Feldgeräteadapters
- 6: Funkmodul
- 7: Gehäuse des Feldgeräteadapters
- 9: Funkantenne
- 10: Logikeinheit
- 12: Zweidrahtleitung
- 13: Anschlussklemme
- 14: Display
- 14a: Äußere Kontur des Displays
- 14b: Verbindungsleitung des Displays
- 15: Feldgeräteinterne Schnittstelle
- 16: Strombegrenzungsschaltung
- 16a: Eingang der Strombegrenzungsschaltung
- 16b: Ausgang der Strombegrenzungsschaltung
- 17: Aufwärtswandler
- 17a: Eingang des Aufwärtswandler
- 17b: Ausgang des Aufwärtswandlers
- 18: Energiespeicher/Kondensator
- 18a: Eingang des Energiespeichers
- 18b: Ausgang des Energiespeichers
- 19: Displayaufnahme bzw. Halterung
- I1: Strom, der über die Zweidrahtleitung fließt
- I2: Strom, der über die feldgeräteinterne Schnittstelle fließt
- Pmin: minimale Betriebsleistung
- Uk: Klemmspannung

## Patentansprüche

1. Feldgeräteadapter zur drahtlosen Datenübertragung (5) zum Anschließen an eine für ein Display (14) eines Feldgeräts (1) vorgesehene feldgeräteinterne Schnittstelle (15), umfassend:
- eine Schnittstelle (5a) zum Anschließen an die für das Display des Feldgerätes vorgesehene feldgeräteinterne Schnittstelle (15);
- ein Funkmodul (6) das dazu eingerichtet ist, ein Datenpaket gemäß einem Standard eines Low Power Wide Area Networks drahtlos auszusenden, wobei das Funkmodul (6) ferner dazu eingerichtet ist, das Datenpaket ausschließlich auszusenden und keine Datenpakte zu empfangen;
- eine Adapterelektronik (10, 16, 17, 18) die dazu eingerichtet ist, die über die feldgeräteinterne Schnittstelle (15) von dem Feldgerät (1) stammenden Daten in Datenpakete, vorzugsweise in Datenpakete mit einer konstanten oder mit einer unterschiedlichen Größe, zu wandeln und ferner eine über die feldgeräteinterne Schnittstelle (15) bereitgestellte Energie auf einen vorbestimmten Wert zu begrenzen und mit der begrenzten Energie einen Energiespeicher (18), vorzugsweise kontinuierlich zu laden, wobei der vorbestimmte Wert derartig festgelegt ist, dass der Wert höchstens einem maximalen Energiebedarf des vorgesehenen Displays (14) entspricht und die Adapterelektronik (10, 16, 17, 18) ferner dazu eingerichtet ist, einen Ladezustand des Energiespeichers (18) zu überwachen und anhand des Ladezustands dem Funkmodul (6) eine von dem Energiespeicher (18) stammende Energie zum Aussenden des Datenpaketes zur Verfügung zu stellen, sodass das Funkmodul (6) das Datenpaket aussendet, wobei die Adapterelektronik (10, 16, 17, 18) ferner dazu eingerichtet ist, einen aktuell ermittelten Ladezustand mit einem vorbestimmten Ladezustand zu vergleichen und bei Erreichung des vorbestimmten Ladezustandes dem Funkmodul (6) eine von dem Energiespeicher stammende Energie zum Aussenden des Datenpaketes zur Verfügung zu stellen, sodass das Funkmodul (6) das Datenpaket aussendet.

2. Feldgeräteadapter nach Anspruch 1, wobei der Energiespeicher (18) einen Kondensator, insbesondere einen Elektrolytkondensator umfasst und die Adapterelektronik (10, 16, 17, 18) einen Aufwärtswandler (17) aufweist, der dazu ausgebildet ist, eine an der feldgeräteinternen Schnittstelle (15) anliegende Spannung auf ein im Verhältnis zu der anliegenden Spannung höhere, insbesondere wenigstens zweifach höhere Spannung zu konvertieren und ferner die höhere Spannung an dem Kondensator zum Laden bereitzustellen.

3. Feldgeräteadapter nach dem vorhergehenden Anspruch, wobei das Funkmodul (6) dazu eingerichtet ist, in einem aktiven Modus die Datenpakete auszusenden und in einem nicht aktiven Modus eine Funkverbindung zu dem Low Power Wide Area Network zwar aufrechtzuerhalten, jedoch wenger Energie zu verbrauchen, wobei die Adapterelektronik (10, 16, 17, 18) ferner dazu eingerichtet ist, bei Erreichen des bestimmten Ladezustandes des Energiespeichers das Funkmodul (6) von dem nicht aktiven in den aktiven Modus zu schalten.

4. Feldgeräteadapter nach dem vorhergehenden Anspruch, wobei die Adapterelektronik (10, 16, 17, 18) ferner derartig eingerichtet ist, Datenpakete mit konstanter Größe bereitzustellen und die Größe des Datenpakets und der vorbestimmte Ladezustand derartig aufeinander abgestimmt sind, dass die von dem Energiespeicher (18) stammende Energie gerade zum Aussenden eines einzelnen Datenpakets ausreicht.

5. Feldgeräteadapter nach einem der Ansprüche 1 bis 3, wobei die Adapterelektronik (10, 16, 17, 18) ferner dazu eingerichtet ist, Datenpakete mit unterschiedlicher Größe bereitzustellen und ferner die Größe eines jeden Datenpaketes vor dem Aussenden an einen aktuellen Ladezustand des Energiespeichers (18) anzupassen, sodass das Funkmodul (6) größenangepasste Datenpakete in Abhängigkeit des aktuellen Ladezustandes aussendet.

6. System der Automatisierungstechnik aufweisend ein Feldgerät und einen Feldgeräteadapter zur drahtlosen Datenübertragung nach Anspruch 1, wobei das Feldgerät (1) eine Feldgeräteelektronik (4) mit einer feldgeräteinternen Schnittstelle (15) für ein Display (14) aufweist und der Feldgeräteadapter (5) mit einer Schnittstelle (5a) an die feldgeräteinterne Schnittstelle (15) elektrisch angeschlossen ist.

7. System nach dem vorhergehenden Anspruch, wobei das Feldgerät (1) ferner eine Displayaufnahme (19) zur mechanischen Fixierung des Displays (14) aufweist und die Feldgeräteelektronik (4) derartig in dem Feldgerät (1) positioniert ist, dass die Displayaufnahme (19) in einem Gehäuseabschnitt mit einer transparenten Gehäusewand (2a) angeordnet ist, wobei der Feldgeräteadapter (5) mit einer äußeren Kontur korrespondierend zu einer äußeren Kontur des Displays (14a) ausgebildet ist und der Feldgeräteadapter (5) anstelle des Displays (14) in die Displayaufnahme (19) zur mechanischen Fixierung eingebracht ist, sodass das Feldgerät (1) anstelle des Displays (14) den in der Displayaufnahme (19) mechanisch gehaltenten Feldgeräteadapter (5) aufweist.

8. Verfahren zum Betreiben eines Feldgeräteadapters zur drahtlosen Datenübertragung nach Anspruch 1 an einem Feldgerät, aufweisend die folgenden Schritte:
- Freilegen einer feldgeräteinternen Schnittstelle des Feldgerätes an der ein Display des Feldgerätes elektrisch anschließbar ist;
- Anschließen des Feldgeräteadapters an die feldgeräteinterne Schnittstelle, sodass der Feldgeräteadapter anstelle des Displays elektrisch an die feldgeräteinterne Schnittstelle angeschlossen ist.

## Claims

1. A field device adapter for wireless data transfer (5) for connection to a field-device-internal interface (15) provided for a display (14) of a field device (1), the adapter comprising:
- an interface (5a) for connection to the field-device-internal interface (15) provided for the display of the field device;
- a radio module (6), which is configured to wirelessly transmit a data packet in accordance with a standard of a low-power wide-area network, wherein the radio module (6) is further configured to only transmit the data packet and not to receive data packets;
- adapter electronics (10, 16, 17, 18), which are configured to convert the data originating from the field device (1) into data packets via the field-device-internal interface (15), preferably into data packets of a constant or of different sizes, and also to limit an energy provided via the field-device-internal interface (15) to a predetermined value and to charge an energy storage unit (18) with the limited energy, preferably continuously, wherein the predetermined value is set such that the value corresponds at most to a maximum energy requirement of the provided display (14), and the adapter electronics (10, 16, 17, 18) are further configured to monitor a state of charge of the energy storage unit (18) and, based on the state of charge, to provide the radio module (6) with an energy originating from the energy storage unit (18) for transmitting the data packet so that the radio module (6) transmits the data packet, wherein the adapter electronics (10, 16, 17, 18) are also configured to compare a currently determined state of charge with a predetermined state of charge and, when the predetermined state of charge is reached, to provide the radio module (6) with an energy originating from the energy storage unit for transmitting the data packet so that the radio module (6) transmits the data packet.

2. The field device adapter as claimed in claim 1, wherein the energy storage unit (18) comprises a capacitor, in particular an electrolytic capacitor, and the adapter electronics (10, 16, 17, 18) have a boost converter (17) which is designed to convert a voltage applied at the field-device-internal interface (15) to a voltage that is higher than the applied voltage, in particular a voltage that is at least twice as high, and also to provide the higher voltage at the capacitor for charging.

3. The field device adapter as claimed in the preceding claim, wherein the radio module (6) is configured to transmit the data packets in an active mode and to maintain a radio connection to the low-power wide-area network in the non-active mode, but to consume less energy, wherein the adapter electronics (10, 16, 17, 18) are also configured to switch the radio module (6) from the non-active mode to the active mode when the determined state of charge of the energy storage unit is reached.

4. The field device adapter as claimed in any one of the preceding claims, wherein the adapter electronics (10, 16, 17, 18) are also configured to provide data packets of constant size and the size of the data packets and the predetermined state of charge are matched to each other in such a way that the energy originating from the energy storage unit (18) is just sufficient for transmitting an individual data packet.

5. The field device adapter as claimed in any one of claims 1 to 3, wherein the adapter electronics (10, 16, 17, 18) are also configured to provide data packets of different sizes and also, prior to the transmission, to adapt the size of each data packet to the current state of charge of the stored energy unit (18) so that the radio module (6) transmits size-adapted data packets in dependence on the current state of charge.

6. An automation technology system, comprising a field device and a field device adapter for wireless data transfer as claimed in claim 1, wherein the field device (1) has field device electronics (4) with a field-device-internal interface (15) for a display (14) and the field device adapter (5) is electrically connected to the field-device-internal interface (15) by an interface (5a).

7. The system as claimed in the preceding claim, wherein the field device (1) also has a display receptacle (19) for mechanically fixing the display (14) and the field device electronics (4) are positioned in the field device (1) such that the display receptacle (19) is arranged in a housing portion having a transparent housing wall (2a), wherein the field device adapter (5) is formed with an external contour corresponding to an external contour of the display (14a) and the field device adapter (5), instead of the display (14), is inserted into the display receptacle (19) for mechanical fixing so that the field device (1), instead of the display (14), comprises the field device adapter (5) mechanically held in the display receptacle (19).

8. A method for operating a field device adapter for wireless data transfer as claimed in claim 1 to a field device, the method having the following steps:
- exposing a field-device-internal interface of the field device to which a display of the field device is electrically connectable;
- connecting the field device adapter to the field-device-internal interface so that the field device adapter instead of the display is electrically connected to the field-device-internal interface.

## Revendications

1. Adaptateur d'appareil de terrain destiné à la transmission de données sans fil (5) à raccorder à une interface (15) interne à l'appareil de terrain prévue pour un afficheur (14) d'un appareil de terrain (1), lequel adaptateur comprend :
- une interface (5a) pour le raccordement à l'interface (15) interne à l'appareil de terrain prévue pour l'afficheur de l'appareil de terrain ;
- un module radio (6), lequel est conçu pour émettre sans fil un paquet de données selon une norme d'un réseau étendu à faible puissance, le module radio (6) étant en outre conçu pour émettre exclusivement le paquet de données et pour ne recevoir aucun paquet de données ;
- une électronique d'adaptateur (10, 16, 17, 18), laquelle est conçue pour convertir les données provenant de l'appareil de terrain (1) via l'interface interne à l'appareil de terrain (15) en paquets de données, de préférence en paquets de données de taille constante ou variable, et en outre à limiter à une valeur prédéterminée une énergie mise à disposition par l'intermédiaire de l'interface (15) interne à l'appareil de terrain et à charger, de préférence en continu, un accumulateur d'énergie (18) avec l'énergie limitée, la valeur prédéterminée étant fixée de telle sorte que la valeur correspond au maximum à un besoin en énergie maximal de l'afficheur (14) prévu et l'électronique d'adaptateur (10, 16, 17, 18) est en outre conçue pour surveiller un état de charge de l'accumulateur d'énergie (18) et, sur la base de l'état de charge, mettre à la disposition du module radio (6) une énergie provenant de l'accumulateur d'énergie (18) pour l'émission du paquet de données, de sorte que le module radio (6) émet le paquet de données, l'électronique d'adaptateur (10, 16, 17, 18) étant en outre conçue pour comparer un état de charge actuellement déterminé avec un état de charge prédéterminé et, lorsque l'état de charge prédéterminé est atteint, pour mettre à disposition du module radio (6) une énergie provenant de l'accumulateur d'énergie pour l'émission du paquet de données, de sorte que le module radio (6) émet le paquet de données.

2. Adaptateur d'appareil de terrain selon la revendication 1, pour lequel l'accumulateur d'énergie (18) comprend un condensateur, notamment un condensateur électrolytique, et l'électronique d'adaptateur (10, 16, 17, 18) présente un convertisseur élévateur (17), lequel est conçu pour convertir une tension appliquée à l'interface (15) interne à l'appareil de terrain en une tension plus élevée par rapport à la tension appliquée, notamment au moins deux fois plus élevée, et pour mettre en outre à disposition la tension plus élevée sur le condensateur en vue de la charge.

3. Adaptateur d'appareil de terrain selon la revendication précédente, pour lequel le module radio (6) est conçu pour émettre les paquets de données dans un mode actif et pour, certes, maintenir une liaison radio avec le réseau étendu à faible puissance dans un mode non actif, mais aussi pour consommer moins d'énergie, l'électronique d'adaptateur (10, 16, 17, 18) étant en outre conçue pour commuter le module radio (6) du mode non actif au mode actif lorsque l'état de charge déterminé de l'accumulateur d'énergie est atteint.

4. Adaptateur d'appareil de terrain selon la revendication précédente, pour lequel l'électronique d'adaptateur (10, 16, 17, 18) est en outre conçue pour fournir des paquets de données de taille constante, et la taille du paquet de données et l'état de charge prédéterminé sont adaptés l'un à l'autre de telle sorte que l'énergie provenant de l'accumulateur d'énergie (18) est juste suffisante pour émettre un seul paquet de données.

5. Adaptateur d'appareil de terrain selon l'une des revendications 1 à 3, pour lequel l'électronique d'adaptateur (10, 16, 17, 18) est en outre conçue pour fournir des paquets de données de différentes tailles et en outre pour adapter la taille de chaque paquet de données à un état de charge actuel de l'accumulateur d'énergie (18) avant l'émission, de sorte que le module radio (6) émet des paquets de données adaptés en taille en fonction de l'état de charge actuel.

6. Système de la technique d'automatisation présentant un appareil de terrain et un adaptateur d'appareil de terrain destiné à la transmission de données sans fil selon la revendication 1, l'appareil de terrain (1 ) présentant une électronique d'appareil de terrain (4) avec une interface (15) interne à l'appareil de terrain pour un afficheur (14) et l'adaptateur d'appareil de terrain (5) étant raccordé électriquement avec une interface (5a) à l'interface (15) interne à l'appareil de terrain.

7. Système selon la revendication précédente, pour lequel l'appareil de terrain (1) présente en outre un logement d'afficheur (19) destiné à la fixation mécanique de l'afficheur (14) et l'électronique d'appareil de terrain (4) est positionnée dans l'appareil de terrain (1) de telle sorte que le logement d'afficheur (19) est disposé dans une section de boîtier avec une paroi de boîtier transparente (2a), l'adaptateur d'appareil de terrain (5) étant réalisé avec un contour extérieur correspondant à un contour extérieur de l'afficheur (14a) et l'adaptateur d'appareil de terrain (5) étant inséré à la place de l'afficheur (14) dans le logement d'afficheur (19) pour la fixation mécanique, de sorte que l'appareil de terrain (1) présente à la place de l'afficheur (14) l'adaptateur d'appareil de terrain (5) maintenu mécaniquement dans le logement d'afficheur (19).

8. Procédé destiné à l'exploitation d'un adaptateur d'appareil de terrain pour la transmission de données sans fil selon la revendication 1 sur un appareil de terrain, lequel procédé comprend les étapes suivantes :
- Mise à disposition d'une interface interne à l'appareil de terrain à laquelle un afficheur de l'appareil de terrain peut être raccordé électriquement ;
- Raccordement de l'adaptateur d'appareil de terrain à l'interface interne à l'appareil de terrain, de sorte que l'adaptateur d'appareil de terrain soit raccordé électriquement à l'interface interne à l'appareil de terrain à la place de l'afficheur.
